# EUROPÄISCHE PATENTANMELDUNG

(11) **EP 1 278 040 A2**
(43) Veröffentlichungstag der Anmeldung: **22.01.2003**
(21) Anmeldenummer: 02013286.6
(22) Anmeldetag: 18.06.2002
(51) Int. Cl.: G01B 7/16

(54) **Fahrzeugreifen sowie System und Verfahren zur Messung der Verformung von Fahrzeugreifen**

(30) Priorität: 10.07.2001 DE 10133428
(71) Anmelder: Continental Aktiengesellschaft, 30165 Hannover (DE)
(72) Erfinder: Goslar, Marius, Dr., 38106 Braunschweig (DE); Kleinhoff, Klaus, 31552 Rodenberg (DE)

(57) **Zusammenfassung**

Ausgehend von einem Fahrzeugreifen (1) mit mindestens einer bereichsweise magnetisierbaren Seitenwand (2), wobei auf dieser Seitenwand (2) mindestens eine innere Spur (3a) und eine äußere Spur (3b) von Sektoren (4) angeordnet ist, wobei jede Spur (3a, 3b) eine Vielzahl von verschieden - vorzugsweise mit alternierender Polung - magnetisierten Sektoren (4) enthält, soll neben der an sich bereits bekannten Längskrafterkennung mit geringstmöglichem Aufwande auch eine Erkennung der Reifeneinfederung ermöglicht werden.

Zu diesem Zwecke verlaufen einige Sektorübergänge (5a) zwischen magnetisierten Sektoren (4) in einer ersten Neigung (α) zur Radialen und einige andere Sektorübergänge (5b) in einer anderen, zweiten Neigung (β) zur Radialen des Fahrzeugreifens (1). Vorzugsweise ist genau eine der Neigungen gleich Null. Weiter bevorzugt wird auch noch eine dritte Neigung (χ) verwendet, was als weitere Leistung dann auch noch eine Drehsinnerkennung erlaubt.

## Beschreibung

Die Erfindung betrifft laut dem Oberbegriff des Anspruchs 1 einen Fahrzeugreifen mit mindestens einer bereichsweise magnetisierbaren Seitenwand, wobei mindestens eine innere und eine äußere konzentrische Spur magnetisiert sind, und wobei die Spuren jeweils aus einer Vielzahl von Sektoren bestehen, die unterschiedlich magnetisiert sind.

Die Erfindung betrifft laut dem Oberbegriff des Anspruchs 10 ferner ein System zur Messung der Verformung von Fahrzeugreifen, wobei jeweils ein Magnetfeldsensor auf je eine der mindestens zwei konzentrischen Spuren magnetisierter Sektoren ausgerichtet ist und eine Auswerteeinheit mit den Magnetfeldsensoren verbunden ist, wobei die Auswerteeinheit zur Ermittlung der tangentialen Verformung des Fahrzeugreifens aus den Phasenwinkeln zwischen den Messsignalen für die Spuren mit verschiedenem Radius ausgebildet ist.

Die Erfindung betrifft laut dem Oberbegriff des Anspruchs 10 weiterhin ein Verfahren zur Messung der Verformung von Fahrzeugreifen mittels jeweils eines Magnetfeldsensors, der auf je eine der mindestens zwei konzentrischen Spuren magnetisierter Sektoren ausgerichtet ist, wobei die tangentiale Verformung des Fahrzeugreifens aus den Phasenwinkeln zwischen den Messsignalen für die Spuren mit unterschiedlichem Radius ermittelt wird.

Zur Messung der tangentialen Verformung von Fahrzeugreifen, die insbesondere beim Abbremsen eines Fahrzeuges durch die exzentrisch angreifende Bremskraft und das so erzeugte, den Reifen tordierende Drehmoment auftritt, werden gemäß der grundlegenden **DE-OS 44 35 160 A1** konzentrische magnetisierte Spuren mit unterschiedlichen Radien in der Seitenwand eines Fahrzeugreifens erzeugt. Die Spuren bestehen aus einer Vielzahl von nebeneinander angeordneten magnetisierten Sektoren mit abwechselnder Polrichtung, vorzugsweise erzeugt durch eine Vorrichtung gemäß **DE-PS 196 46 251 C2.** Die Sektoren sind so geformt und ausgerichtet, dass die Sektorübergänge radial zum Fahrzeugreifen - also auf den Achsmittelpunkt zu - verlaufen.

In der Nähe dieser Spuren sind Magnetfeldsensoren nichtrotierend angeordnet, von denen ein jeder bei einer Rotation des Fahrzeugreifens eine spezifische Kurve der Magnetfeldstärke über der Zeit und damit über dem Drehwinkel für die jeweilige der konzentrischen Spuren ermittelt. Diese Kurve heiße im Folgenden "Magnetfeldkurve".

Die Phasendifferenz, die zwischen den Magnetfeldkurven der Spuren unterschiedlicher Radien bei tangentieller Verformung des Fahrzeugreifens auftritt, ist ein Maß für die tangentiale Verformung und damit für die interessierende Längskraft. Aus der Amplitude der Magnetfeldkurve kann ferner die Lateralkraft bestimmt werden.

Bei einer Ausführung vorbekannter Lösung sind die Magnetfeldsensoren senkrecht zur Fahrbahn und oberhalb des Mittelpunktes des Fahrzeugreifens angeordnet. Relativ zu dem Radius zwischen Reifenmittelpunkt und Bodenaufstandsflächenmitte sind die Sensoren somit im Winkel von ungefähr 180° angeordnet. In dieser sogenannten 180°-Stellung werden tangentiale Verformungen des Fahrzeugreifens unabhängig von der Reifeneinfederung erkannt. Um auch Informationen über die Reifeneinfederung zu gewinnen, ist gemäß diesem Stande der Technik der Einsatz eines zweiten Sensorpaares erforderlich, vorzugsweise in 90°- oder 270°-Stellung. Die Reifeneinfederung hängt im Wesentlichen von der Radlast und dem Luftdruck bzw. dem Verhältnis dieser beiden Größen ab. Man kann daher von der Reifeneinfederung auf das Verhältnis von Radlast zu Reifenluftdruck schließen bzw. wenn eine der beiden Größen bekannt ist auf die jeweils andere schließen.

**Aufgabe** der Erfindung ist es, einen Fahrzeugreifen, ein System und ein Verfahren zur Messung der Verformung von Fahrzeugreifen dahingehend zu verbessern, dass die Reifeneinfederung messbar ist. Dabei soll ein einziges Sensorpaar ausreichen, um Ausfallwahrscheinlichkeit und Kosten klein zu halten. Hiernach ist eine Aussage über die Radlast oder den Luftdruck (Luftüberdruck im Reifen) aus der tangentialen Verformungsmessung mittels nur eines Sensorpaares möglich; dazu sollte - wenn nicht schon die Kenntnis des genannten Verhältnisses von Radlast zu Luftdruck ausreicht - eine Aussage über den Luftdruck bzw. die Radlast anderweitig gewonnen werden. Von letztgenannten Größen ist die Radlast die leichter messbare, zum Beispiel mittels Dehnungsmessstreifen im Falle einer Stahlfederung oder einer Druckmessdose im Falle einer Luftfederung.

Der Fahrzeugreifen gemäß Patentanspruch 1 löst diese Aufgabe und ist dadurch gekennzeichnet, dass einige Sektorübergänge zwischen magnetisierten Sektoren in einer ersten Neigung zur Radialen des Fahrzeugreifens verlaufen, während einige andere Sektorübergänge zwischen magnetisierten Sektoren in einer anderen, zweiten Neigung zur Radialen des Fahrzeugreifens verlaufen.

Der Reifen plattet sich umso mehr ab, desto höher die Radlast und desto niedriger der Überdruck im Reifeninneren ist. Der Mittelpunkt der steifen Felge nähert sich dabei der Bodenaufstandsfläche. Der bei dieser Annäherung zurück gelegte Weg wird auch als Reifeneinfederung bezeichnet.

Die Reifeneinfederung hat in der 0°- und in der 180°-Sensorstellung keinen Einfluss auf die Passierzeitpunkte derjenigen Sektorübergänge, die radial zum Mittelpunkt des Fahrzeugreifens verlaufen.

Hingegen verändert sich der Winkel α der schräg zur Radialen angeordneten Sektoren bei Veränderungen der Reifeneinfederung. Dementsprechend ändern sich die Passierzeitpunkte und damit auch die zu messenden Zeitintervalle und zwar umso mehr, desto schräger die Sektorgrenzen zur Radialen verlaufen. Die mit den Magnetfeldsensoren beim Passieren schräger Sektorgrenzen aufgenommenen Phasenänderungen liefern also ein solches Signal der tangentialen Verformung des Fahrzeugreifens, das von der Reifeneinfederung abhängig ist.

Die mit den Magnetfeldsensoren beim Passieren herkömmlicher, also radialer Sektorgrenzen aufgenommenen Phasenänderungen liefern hingegen ein solches Signal der tangentialen Verformung des Fahrzeugreifens, das von der Reifeneinfederung unabhängig ist. Ein von der besagten Größe unabhängiges Signal zu haben, lässt zwar das Signal besonders leicht interpretieren, eine Auftrennung in die zwei Einzelinformationen gelingt aber auch schon, wenn bei beiden Signalen der Grad der Abhängigkeit nur ausreichend verschieden ist. Beispielsweise können die einen Sektorgrenzen um 2° und die anderen um 8° geneigt sein.

Besonders vorteilhaft ist es, wenn sich auf einer oder beiden Magnetspuren die radialen Sektorübergänge und die schrägen Sektorübergänge jeweils abwechseln, weil so die höchstmögliche Auflösung über dem Raddrehwinkel für beide zu messenden Größen erreicht wird. Die alternierende Anordnung der verschieden geneigten Sektorgrenzen produziert alternierend stärker und weniger stark von besagter Reifeneinfederung abhängige Signale. So kann die zunächst singuläre Signalabfolge leicht in zwei Signalabfolgen halber Signaldichte (=Signalhäufigkeit pro Umdrehungswinkel) aufgespalten werden.

Durch Auswertung beider so getrennter Abfolgen von Signalen oder Messergebnissen, also der beiden verschiedenen tangentialen Verformungen, kann die Reifeneinfederung zusätzlich zur übertragenen Längskraft bestimmt werden mit nur einem einzigen Sensorpaar, das in der 0°- oder 180°-Stellung angeordnet ist. Diese Sensorstellungen haben bislang nur die Messung der Längskraft erlaubt.

Neben der Kosteneinsparung durch das Auskommen mit einem einzigen anstelle zweier Sensorpaare liegt ein Vorteil darin, dass gerade die Sensorstellung von 180° für ein singuläres Sensorpaar am günstigsten ist, weil deren Anordnung die geringsten Schwierigkeiten bereitet. Sensoren in der 90°- oder 270°-Stellung befänden sich hingegen insbesondere an der lenkbaren Achse weit von den radführenden oder radbremsenden Bauteilen entfernt, sodass sie nicht als Sensorträger mitgenutzt werden können. Also müssten für Sensoren in diesen Stellungen separate Bauteile als Sensorträger vorgesehen werden, die zusätzliches Geld und deren ausreichend steife Bemessung zusätzliche Masse kosten würde und dies unglücklicherweise als ungefederte Masse.

Ein weiterer Vorteil unterschiedlich geneigter Sektorübergänge lässt sich dann erzielen, wenn drei verschiedene Neigungen verwendet werden. Zu dessen Erklärung seien zunächst die folgenden Definitionen eingefügt:

Die erste Neigung zur Radialen, die auch 0° sein darf, sei als " a" bezeichnet, die zweite als " b" und die dritte als " c" . Ein Sektorübergang (oder auch eine " Sektorgrenze" ) der Neigung a heiße " 5a" , ein Sektorübergang der Neigung b heiße " 5b" und ein Sektorübergang der Neigung c heiße " 5c" .

Mit einer Abfolge von Sektorübergängen wie beispielsweise 5a, 5b, 5c; 5a, 5b, 5c; 5a, 5b, 5c; ...
lässt sich zusätzlich zu den bereits genannten Daten wie der übertragenen Längskraft und der Reifeneinfederung auch noch der Drehsinn erkennen.

Dafür muss die Neigungsabfolge - wie im obigen bevorzugten Ausführungsbeispiel angegeben - asymmetrisch sein. Dabei bedeutet " asymmetrisch" , dass die vorwärts gelesene Folge nicht mittels irgendeiner Phasenverschiebung auf die rückwärts gelesene Folge abgebildet werden kann. Nachfolgend werden zwei weitere asymmetrische Folgen angegeben:
5a, 5b, 5c, 5c; 5a, 5b, 5c, 5c; 5a, 5b, 5c, 5c; ...
5a, 5b, 5c, 5b, 5c; 5a, 5b, 5c, 5b, 5c; 5a, 5b, 5c, 5b, 5c; ...
Hingegen ist dieser Vorteil nicht erzielbar mit symmetrischen Folgen wie etwa
5a, 5b, 5c, 5b; 5a, 5b, 5c, 5b; 5a, 5b, 5c, 5b; ... .

Wie alle genannten Beispiele zeigen, sind zweckmäßigerweise zur Vereinfachung der die Daten interpretierenden Software alle Neigungsfolgen periodisch aufgebaut. Dabei ist es besonders günstig, eine möglichst kleine Periodenlänge - die absolut kürzeste beträgt 3, wie im ersten Beispiel - zu wählen.

Eine aperiodische Neigungsabfolge hätte den Vorteil, Aufgaben der Reifenidentifikation mit übernehmen zu können, wie z. B. Speed-Index-Zuordnung zu einer bestimmten Neigungsabfolge. Es müsste dann aber eine aufwändigere Software zur Signalinterpretation eingesetzt werden, am besten eine lernfähige.

Eine Drehsinnerkennung, wie sie durch die genannte Verwendung von drei verschiedenen Neigungen der Sektorübergänge möglich ist, ermöglicht zum Beispiel eine Überwachung, ob drehsinngebunden profilierte Reifen richtig herum montiert sind. Weiterhin ist damit auch bei Rückwärtsfahrt die Funktionstüchtigkeit von Antriebsschlupf- und Bremsschlupf-Regelsystemen erreichbar und zudem die Funktionstüchtigkeit von ESP-Systemen (electronic stability program) verbessert.

Bei einem System zur Messung der Verformung eines erfindungsgemäßen Fahrzeugreifens der Gattung, wie eingangs bereits aus dem Oberbegriff des Anspruches 10 rezitiert, lässt sich die Funktionsweise der Erfindung besonders leicht beschreiben mit vorheriger Betrachtung eines Sonderfalles:

In dem bevorzugten Sonderfall, wo eine der beiden Neigungen von Sektorgrenzen gleich null ist, produziert die Auswerteeinheit erfindungsgemäß
a) ein von der Reifeneinfederung unabhängiges Verformungssignal aus den Phasenwinkeln der radialen Sektorübergänge, und
b) ein von der Reifeneinfederung abhängiges Verformungssignal aus den Phasenwinkeln der zur Radialen schrägen Sektorübergänge.

In dem allgemeineren und in Anspruch 10 behandelten Fall, in dem keine Schar von Sektorgrenzen den Neigungswinkel Null zu haben braucht, produziert die Auswerteeinheit erfindungsgemäß
c) ein von der Reifeneinfederung weniger abhängiges Verformungssignal aus den Phasenwinkeln der weniger gegenüber der Radialen geneigten Sektorübergänge, und
d) ein von dem Verhältnis der Reifeneinfederung stärker abhängiges Verformungssignal aus den Phasenwinkeln der zur Radialen stärker geneigten, also schrägeren, Sektorübergänge.

Ferner ist auch eine betragsmäßig gleich große Schrägstellung der verschiedenen Sektorgrenzen möglich, jedoch in verschiedener Orientierung; notwendig ist nur, dass es überhaupt verschiedene geneigte Sektorgrenzen gibt.

Vorzugsweise mittels solcher Algorithmen, wie sie dem Fachmann zur Lösung linearer Gleichungssysteme bekannt sind, werden diese beiden Signale dann so weiter verarbeitet, dass ein von der Reifeneinfederung unabhängiges erstes Signal und ein abhängiges zweites Signal geliefert wird. Nach der Aufspaltung in diese beiden Einzelsignale kann es sinnvoll sein, die Signale auf einen Datenbus zu setzen, denn diese Daten sind bereits weit genug verarbeitet, um in einer weiteren, das gesamte Fahrzeug überwachenden Auswerteeinheit berücksichtigt zu werden, sei es zur Berechnung eines optimierten Bremseneingriffes, sei es für eine Antriebsdrehmoment-Kontrolle, sei es für einen Lenkeingriff oder für eine Warnung vor Minderluftdruck oder dergleichen.

Die Magnetfeldsensoren sind vorzugsweise in einer Stellung senkrecht in Bezug auf die Fahrbahn und oberhalb des Mittelpunkts der Fahrzeugreifen angeordnet. Sie befinden sich somit relativ zu dem Radius von dem Fahrzeugreifenmittelpunkt bis zur Mitte der Bodenaufstandsfläche im Winkel von etwa 180°. In dieser Position der Magnetfeldsensoren werden tangentiale Verformungen der Fahrzeugreifen unabhängig von der Reifeneinfederung erkannt, sofern die Sektorübergänge der magnetisierten Sektoren radial zum Mittelpunkt des Fahrzeugreifens verlaufen.

Die Auswerteeinheit ist zur Verknüpfung der unabhängig von der Reifeneinfederung ermittelten tangentialen Verformung mit der tangentialen Verformung, die abhängig von der Reifeneinfederung ist, ausgebildet. Durch einfache Subtraktion der beiden Werte für die tangentiale Verformung, die auf der Basis der radialen Sektorübergänge und der schrägen Sektorübergänge ermittelt wurden, kann ein Rückschluss auf die Reifeneinfederung und damit auf die Radlast und/oder auf den Luftdruck gewonnen werden, insbesondere auf das Verhältnis dieser beiden Größen zueinander.

Bei dem Verfahren zur Messung der Verformung von oben beschriebenen Fahrzeugreifen wird der von der Reifeneinfederung unabhängige Anteil der tangentialen Verformung aus den Phasenwinkeln der radialen Sektorübergänge, ermittelt. Weiterhin wird der von der Reifeneinfederung abhängige Anteil der tangentialen Verformung aus den Phasenwinkeln der schrägen Sektorübergänge bestimmt.

Die Erfindung wird nachfolgend anhand der beigefügten Zeichnungen näher erläutert. Es zeigt:
- Fig. 1: schematisch in der Seitenansicht eine Seitenwand eines unbelasteten Fahrzeugreifens mit konzentrischen inneren und äußeren Spuren sowie Magnetfeldsensoren, die im Falle einer Belastung die Bestimmung der vom Fahrzeugreifen übertragenen Lateralkraft und Längskraft erlauben;
- Fig. 1a: die Signale beider Sensoren, jedoch mit übertriebenem Phasenversatz zwischen den beiden Signalen, um diesen Phasenversatz sichtbar zu machen;
- Fig. 2: in schematischer Seitenansicht die Seitenwand des gleichen Reifens wie in Figur 1, jedoch mit (übertrieben dargestellter) Verformung infolge einer Radlast;
- Fig. 3: in einem Diagramm die tangentiale SeitenwandVerformung ΔU bei einer Belastung allein durch die Radlast (gestrichelt) und bei einer Belastung durch Radlast und Bremskraft (durchgezogen) in Abhängigkeit von der Winkelstellung β der Sensoren;
- Fig. 4: ausschnittsweise die Seitenwand eines erfindungsgemäßen Fahrzeugreifens, dessen Übergänge zwischen den magnetisierten Sektoren abwechselnd radial - also zum Mittelpunkt des Fahrzeugreifens - und schräg zur Radialen verlaufen, wobei zwischen der äußeren und der inneren Spur magnetisierter Sektoren - abweichend von den Figuren 1 und 2 - kein Phasenversatz besteht;
- Fig. 5: vollständig die Seitenwand gemäß Figur 4, wobei jedoch zur Vermeidung graphischer Überfrachtung nur in einem der 16 Sektoren der Neigungswinkel α angetragen ist und
- Fig. 6: in einer Ansicht ähnlich Fig. 5 die Seitenwand eines weiteren erfindungsgemäßen Fahrzeugreifens, dessen Übergänge zwischen den magnetisierten Sektoren in drei verschiedenen Neigungen (=Winkel zur Radialen) vorliegen, wobei zwischen der äußeren und der inneren Spur magnetisierter Sektoren kein Phasenversatz besteht.

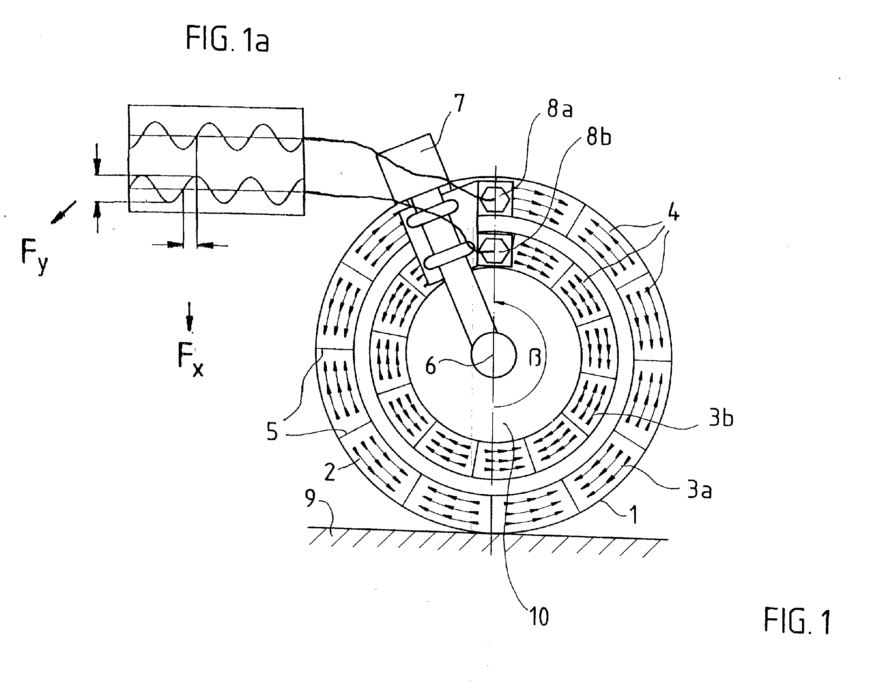

**Figur 1** zeigt schematisch eine herkömmliche Anordnung zur Ermittlung der tangentialen Verformung eines Fahrzeugreifens 1. In der Seitenwand 2 des Reifens 1 befinden sich zwei konzentrische Spuren 3a und 3b aneinander gereihter magnetisierter Sektoren 4. Von Sektor 4 zu Sektor 4 ändert sich in irgendeiner Weise die Magnetisierung, also die magnetische Feldstärke und/oder die Richtung der magnetischen Feldlinien und/oder deren Orientierung; bevorzugt haben alle Sektoren 4 eine dem Betrage nach gleich große - nämlich die maximal mögliche - Feldstärke und in allen Sektoren 4 in der jeweiligen Sektormitte eine Ausrichtung der magnetischen Feldlinien in Umfangsrichtung, wobei die Polung von Sektor zu Sektor alterniert, also in der Mitte des einen Sektors in den Drehsinn weist, in der Mitte des nächsten Sektors entgegen dem Drehsinn weist, in der Mitte des übernächsten Sektors wieder in den Drehsinn weist und so weiter. Im Folgenden wird davon ausgegangen, dass eben diese nach bisheriger Kenntnis beste Ausführung verwirklicht ist.

Bei dieser in Figur 1 dargestellten Ausführung verläuft jede Grenze 5 zwischen zwei benachbarten Sektoren 4, die auch als Sektorgrenze 5 oder Sektorübergang 5 bezeichnet werden kann, wie herkömmlich radial, also zur Rotationsachse 6 des Fahrzeugreifens 1 hin.

Am Federbein 7 der zugeordneten Radaufhängung sind Magnetfeldsensoren 8a, 8b angebracht, die jeweils auf eine der beiden Spuren 3a, 3b magnetisierter Sektoren 4 ausgerichtet sind.

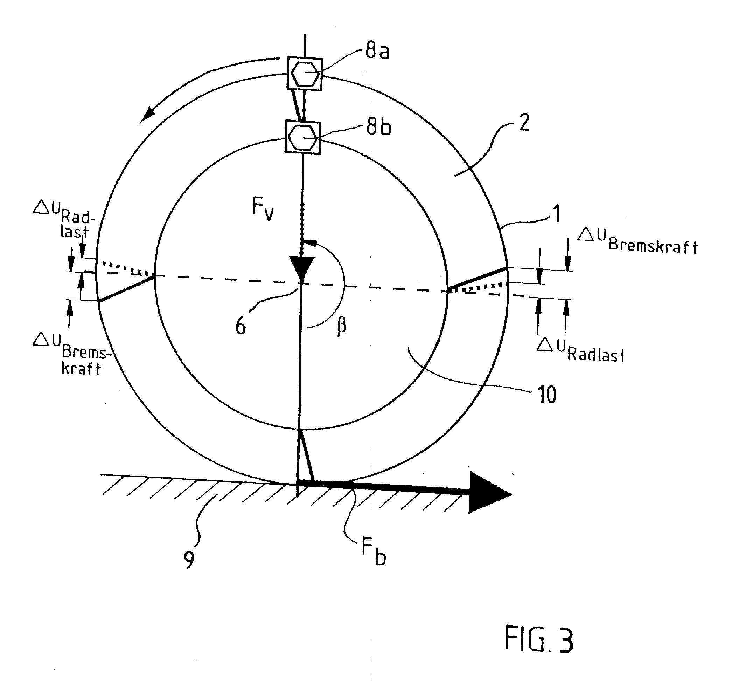

Die Bedeutung der von den Sensoren generierten Signale hängt von deren Stellung zur Mitte der Bodenaufstandsfläche ab. Dabei ist mit " Stellung" der Winkel β zwischen der Radialen durch die Bodenaufstandsflächenmitte und der Radialen durch die Mitte zwischen beiden Sensoren gemeint, so wie dies im Übrigen die Figur 3 illustriert.

Zurück zur Figur 1: Hier befinden sich wie bevorzugt die Magnetfeldsensoren 8a, 8b in der 180°-Stellung. Aufgrund der Vielzahl aneinander angrenzender magnetisierter Sektoren 4 und der damit verbundenen alternierend orientierten Polung haben die von den Magnetfeldsensoren 8a, 8b über der Zeit aufgenommenen Kurven den wie in **Figur 1a** (oben links auf dem gleichen Blatt) dargestellten periodischen Verlauf.

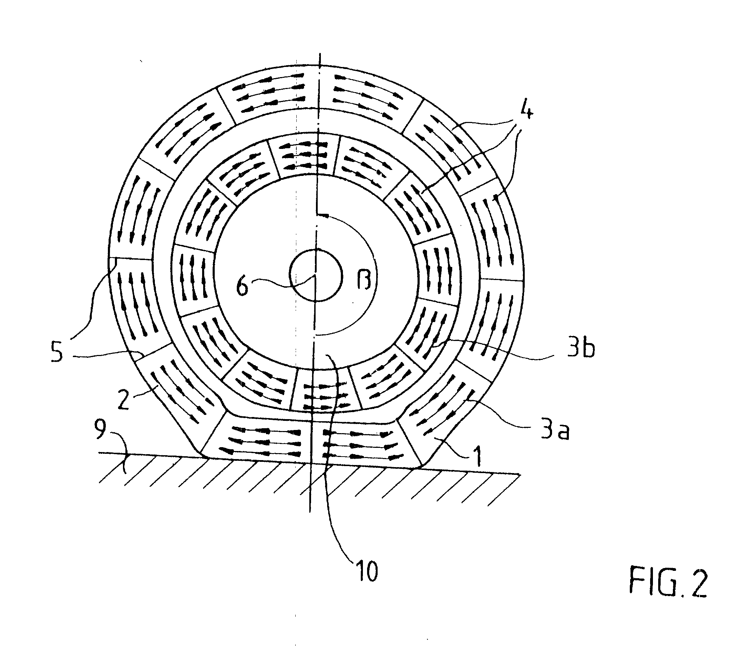

**Figur 2** zeigt, dass bei einer tangentialen Verformung des Fahrzeugreifens 1 - wie sie zum Beispiel durch Abbremsen des Fahrzeugs eintritt - sich in der äußeren Spur 3a die magnetisierten Sektoren um einen größeren Phasenwinkel (" Phasenwinkel" ist der Winkel zur Drehachse 6) als die in der inneren Spur 3b verlagern. Die radial innere Spur 3b ist nämlich wegen ihres geringeren Abstandes zur Felge 10 und wegen der im Wulstbereich kräftigen Materialbemessung drehsteifer mit der Felge 10 verbunden als die radial äußere 3a. Die von den beiden Magnetfeldsensoren 8a, 8b gemessenen Magnetfeldfolgen oder Magnetfeldkurven verschieben sich also gegeneinander.

Aus dieser Verschiebung, einer Phasendifferenz, lässt sich infolge der Kenntnis der Raddrehzahl ein Verschiebungswinkel errechnen. Dieser Verschiebungswinkel zwischen den gemessenen Magnetfeldkurven wird als Maß für die übertragene Längskraft ausgewertet.

Am Rande sei angemerkt, dass sich auch die Amplitude der Schwingung des gemessenen Magnetfeldes auswerten lässt und zwar als ein Maß für die Lateralkraft auf den Fahrzeugreifen 1. Dies liegt daran, dass die Amplitude des Sensorsignals streng monoton steigt, wenn sich der Sensorabstand zum Fahrzeugluftreifen (Luftspalt) verringert, wie dies durch Einfluß einer entsprechend gerichteten Querkraft der Fall ist.

Die **Figur 2** zeigt die Seitenwand 2 des Fahrzeugreifens 1 aus der Figur 1 alleine. Es wird deutlich, dass alle Sektorübergänge 5 der Sektoren 4 im Mittelpunkt 6 des Reifens 1 zusammenlaufen. Diese Ausrichtung heißt in dieser Anmeldung " radial" . Eine " Radiale" ist entsprechend eine Gerade durch den Mittelpunkt 6. Der Reifenmittelpunkt 6 stimmt mit dem Radmittelpunkt 8 überein.

Auch wenn der Reifen - anders als in den bislang behandelten Figuren - belastet wird und dadurch insbesondere im Lauf flächenbereich nicht mehr kreisrund ist, sollen die oben definierten Begriffe, die sich auf den unbelasteten Reifen beziehen, beibehalten werden.

Bei Messung der tangentialen Verschiebung mit Magnetfeldsensoren 8a, 8b in der sogenannten 180°-Stellung hat die Reifeneinfederung keinen Einfluss auf den gemessenen Phasenwinkel und die ermittelte tangentiale Verformung.

Der Zusammenhang,der tangentialen Verformung bei Einwirken einer Bremskraft ist in der **Figur 3** skizziert. Diese schematische Seitenansicht lässt die Seitenwand 2 eines gegen den Uhrzeigersinn rotierenden Reifens 1 erkennen, wobei eine Bremskraft F_{B} auf den Fahrzeugreifen (=Reifen) wirkt, die den Reifen tangential verformt. Durch die formschlüssige Verbindung des Reifens 1 mit der Felge 10 ist die Verformung im inneren Umfang am kleinsten und im äußeren Umfang des Reifens 1 am größten und hat in sehr guter Näherung den dargestellten linearen Verlauf über dem Radius.

Beim Aufbringen einer Bremskraft F_{B} ist die tangentiale Verformung abhängig von der Winkelstellung β der Sensoren in Bezug auf den Radius vom Mittelpunkt 6 des Fahrzeugreifens 1 zur Fahrbahn 9. Aus dem Diagramm ist zu erkennen, dass bei einem Winkel β von 180° die tangentiale Verformung bei freilaufendem Fahrzeugreifen 1 Null beträgt. Hingegen wird beispielsweise bei einer Bremskraft F_{B} von 200 Nm eine tangentiale Verformung von 2 mm gemessen. Idealerweise werden daher die Magnetfeldsensoren 8a, 8b zur Längskraftmessung in der 180°-Stellung angebracht.

Um einen Rückschluss auf das Verhältnis von Radlast zu Überdruck im Reifeninneren zu erlauben, müssen bislang zusätzliche Kraftinformationen gemessen werden. Hierzu sind jedoch nachteilig weitere Sensoren erforderlich.

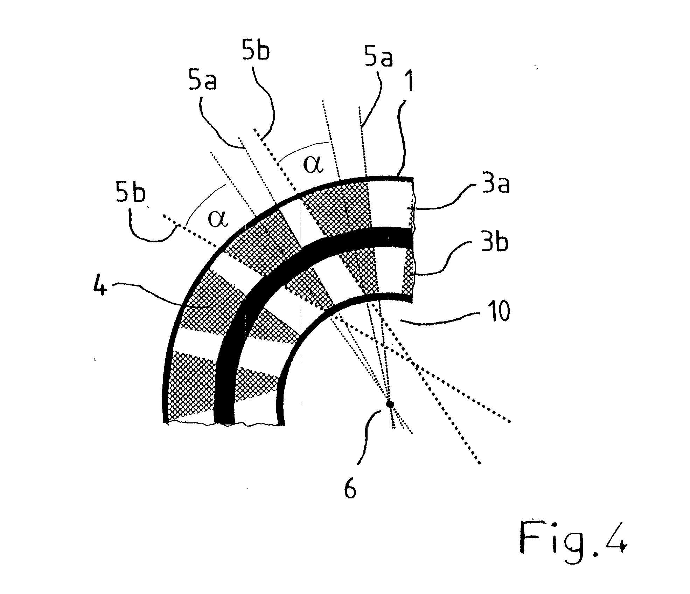

In der **Figur 4** ist ein Ausschnitt der Seitenwand 2 eines Fahrzeugreifens 1 dargestellt, bei dem erfindungsgemäß die Sektorübergänge 5 der Magnetfeldsektoren 3a, 3b abwechselnd radial mit einem Winkel von α gleich Null und schräg in Bezug auf den Radius zum Mittelpunkt des Fahrzeugreifens mit einem Winkel von α ungleich Null aufweisen. Erste Sektorübergänge 5a zwischen magnetisierten Sektoren 4 verlaufen somit radial zum Mittelpunkt des Fahrzeugreifens. Hingegen verlaufen zweite Sektorübergänge 5b zwischen magnetisierten Sektoren in einem Winkel von α ungleich Null schräg in Bezug auf den Radius zum Mittelpunkt des Fahrzeugreifens 1.

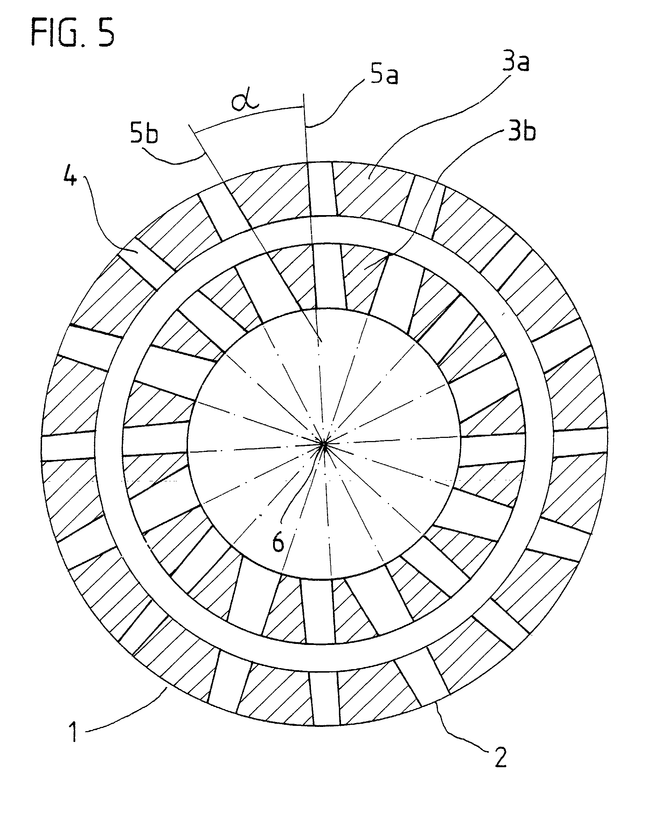

Die **Figur 5** zeigt vollständig die Seitenwand 2 des Fahrzeugreifens 1 aus der Fig. 4. Es wird deutlich, dass sich die radialen Sektorübergänge und die schrägen Sektorübergänge abwechseln. Die Darstellung der Fig. 5 zeigt den Fahrzeugreifen 1 ohne Radlast mit normalem Reifenluftdruck. Umso höher das Verhältnis der Radlast zum Reifenluftdruck ist, desto mehr sinkt die Felge 10 um einen Betrag gegenüber dem unbelasteten Zustand ein. Hierbei verändern sich die weiß eingezeichneten Punkte auf dem Felgenhorn und am Gürtel 11 des Fahrzeugreifens 1 zur Felge 10 zum Gürtel 11 nicht. Hingegen verändert sich der zwischen den Sektorübergängen 5b eingeschlossene Winkel α unter dem Einfluss der Radlast. Mit den analog zu dem in der Fig. 1 skizzierten System aufgenommenen Messsignalen der Magnetfeldsensoren 8a, 8b können die Phasenänderungen aufgrund der Änderungen des Winkels α bestimmt und die tangentiale Verformung in Abhängigkeit von der Reifeneinfederung ermittelt werden.

Die von der Reifeneinfederung unabhängige Komponente der tangentialen Verformung kann aus dem Phasenwinkel des Anteils der Messsignale ermittelt werden, die für die Sektorübergänge 5 mit einem Winkel von α gleich Null gemessen werden, d. h. die radial zum Mittelpunkt 6 des Fahrzeugreifens 1 verlaufen.

Unter dem - hier nicht noch einmal gezeigten (siehe im Übrigen Fig. 2) - Radlasteinfluss verlaufen die Sektorübergänge, die zuvor im unbelasteten Zustande mit einem Winkel von α gleich Null verliefen, nun nicht mehr radial zum Mittelpunkt des Fahrzeugreifens 1, sondern hierzu verdreht. In der 180°-Position der Magnetfeldsensoren 8a, 8b hingegen laufen die Sektorübergänge 5 durch den idealen Mittelpunkt 6 des Fahrzeugreifens 1, so dass in dieser Messposition das Messergebnis unabhängig von der Reifeneinfederung ist.

Durch Verknüpfung der Messergebnisse für beide tangentiale Verformungen, nämlich der unabhängig und abhängig von der Reifeneinfederung kann ein Rückschluss auf eben diese Größe erfolgen.

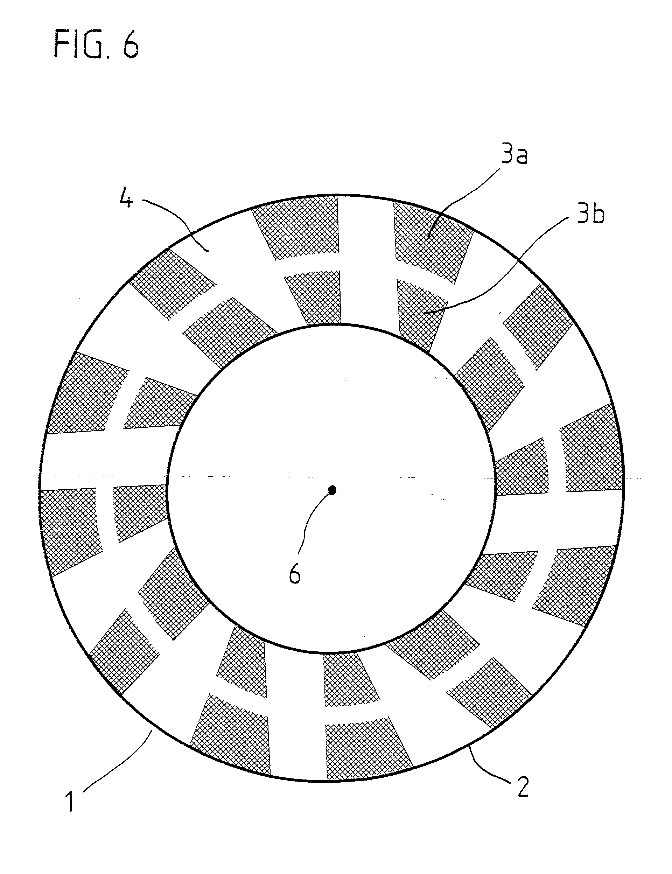

**Figur 6** zeigt in einer Ansicht ähnlich Fig. 5 die Seitenwand 2 eines weiteren erfindungsgemäßen Fahrzeugreifens 1, dessen Übergänge zwischen den magnetisierten Sektoren 3a, 3b in drei verschiedenen Neigungen (=Winkel zur Radialen) vorliegen, wobei zwischen der äußeren und der inneren Spur magnetisierter Sektoren kein Phasenversatz besteht. Die von Figur 5 abweichende Schraffurart hat keine technische Bedeutung.

Zusammenfassend geht die Erfindung von einem Fahrzeugreifen (1) mit mindestens einer bereichsweise magnetisierbaren Seitenwand (2) aus, wobei auf dieser Seitenwand (2) mindestens eine innere Spur (3a) und eine äußere Spur (3b) von Sektoren (4) angeordnet ist, wobei jede Spur (3a, 3b) eine Vielzahl von verschieden - vorzugsweise mit alternierender Polung - magnetisierten Sektoren (4) enthält. Sie will - neben der an sich bereits bekannten Längskrafterkennung - mit geringstmöglichem Aufwande auch eine Erkennung der Reifeneinfederung ermöglichen.

Hierzu verlaufen einige Sektorübergänge (5a) zwischen magnetisierten Sektoren (4) in einer ersten Neigung (α) zur Radialen und einige andere Sektorübergänge (5b) in einer anderen, zweiten Neigung (β) zur Radialen des Fahrzeugreifens (1).

Etwa proportional zur Reifeneinfederung verändert sich diese Neigung an fast allen Umfangsstellen, insbesondere in der 0°-Stellung, aber auch in der messtechnisch besonders attraktiven 180°-Stellung; diese reifeneinfederungsproportionale Neigungsveränderung erfolgt umso stärker, desto stärker die Neigung des betreffenden Sektorüberganges schon im unbelasteten Zustande ist. Der Unterschied zwischen der Neigungsveränderung soll daher als Maß der Reifeneinfederung herangezogen werden.

Um einen möglichst großen und leicht eichbaren Unterschied zu generieren, ist vorzugsweise genau eine der Neigungen gleich Null. Weiter bevorzugt wird auch noch eine dritte Neigung (χ) verwendet, was als weitere Leistung dann auch noch eine Drehsinnerkennung erlaubt, wenn die Abfolge der geneigten Sektorgrenzen asymmetrisch ist, also bei Vorwärtsdrehung eine andere Signalabfolge generieren als bei Rückwärtsdrehung.

Zur Erleichterung des Lesens der zahlreichen Figuren dient der letzte Bestandteil dieser Beschreibung, die folgende Bezugszeichenliste:
1 Fahrzeugreifen
2 Seitenwand von 1
3 Spuren aneinander gereihter magnetischer Sektoren 4
   3a radial innere der Spuren 3
   3b radial äußere der Spuren 3
4 Magnetische Sektoren von 2
5 Sektorgrenzen
6 Rotationsachse von 1
7 Federbein der Radaufhängung (Figur 1)
8 Magnetfeldsensoren, und zwar
   8a zum Ablesen der radial inneren Spur 3a von Sektoren 4
   8b zum Ablesen der radial äußeren Spur 3b von Sektoren 4
9 Straße
10 Felge
11 Mm

## Patentansprüche

1. Fahrzeugreifen (1) mit mindestens einer bereichsweise magnetisierbaren Seitenwand (2), wobei mindestens eine innere und eine äußere konzentrische Spur (3a, 3b) magnetisiert sind, und wobei die Spuren (3a, 3b) jeweils aus einer Vielzahl von Sektoren (4) bestehen, die unterschiedlich magnetisiert sind,
**dadurch gekennzeichnet,**
**dass** einige Sektorübergänge (5a) zwischen magnetisierten Sektoren (4) in einer ersten Neigung zur Radialen des Fahrzeugreifens (1) verlaufen, während einige andere Sektorübergänge (5b) zwischen magnetisierten Sektoren (4) in einer anderen, zweiten Neigung zur Radialen des Fahrzeugreifens (1) verlaufen.

2. Fahrzeugreifen (1) nach Anspruch 1, **dadurch gekennzeichnet, dass** die erste Neigung 0° gegenüber der Radialen ist.

3. Fahrzeugreifen (1) nach Anspruch 2, **dadurch gekennzeichnet, dass** auf einer Spur (3a, 3b) abwechselnd radiale Sektorübergänge (5a) und schräge Sektorübergänge (5b) der magnetisierten Sektoren (4) angeordnet sind.

4. Fahrzeugreifen (1) nach Anspruch 1 oder Anspruch 2, **dadurch gekennzeichnet, dass** er neben Sektorübergängen (5a) einer ersten und Sektorübergängen (5b) einer zweiten Neigung auch Sektorübergänge (5c) einer dritten Neigung aufweist.

5. Fahrzeugreifen (1) nach Anspruch 4, **dadurch gekennzeichnet, dass** die verschieden geneigten Sektorübergänge (5a, 5b, 5c) asymmetrisch periodisch aufeinanger folgen, vorzugsweise mit der kürzestmöglichen Periodenlänge, also 5a, 5b, 5c; 5a, 5b, 5c; 5a, 5b, 5c; ...

6. Fahrzeugreifen (1) nach Anspruch 1, **dadurch gekennzeichnet, dass** sich innerhalb einer Spur (3a und/oder 3b) von Sektoren (4) die magnetische Feldstärke von Sektor (4) zu Sektor (4) verändert unter Einschluss der Möglichkeit, dass für einige der Sektoren (4) die magnetische Feldstärke Null ist.

7. Fahrzeugreifen (1) nach Anspruch 1, **dadurch gekennzeichnet, dass** sich innerhalb einer Spur (3a und/oder 3b) von Sektoren (4) die Richtung der magnetischen Feldlinien von Sektor (4) zu Sektor (4) verändert.

8. Fahrzeugreifen (1) nach Anspruch 1, **dadurch gekennzeichnet, dass** sich innerhalb einer Spur (3a und/oder 3b) von Sektoren (4) die Orientierung der magnetischen Feldlinien von Sektor (4) zu Sektor (4) verändert.

9. Fahrzeugreifen (1) nach Anspruch 8, **dadurch gekennzeichnet, dass** in allen Sektoren (4) in der jeweiligen Sektormitte die magnetischen Feldlinien in Umfangsrichtung verlaufen und sich die Orientierung der magnetischen Feldlinien von Sektor (4) zu Sektor (4) verändert.

10. System zur Messung der Verformung von Fahrzeugreifen (1), wobei jeweils ein Magnetfeldsensor (8a, 8b) auf je eine der mindestens zwei konzentrischen Spuren (3a, 3b) magnetisierter Sektoren ausgerichtet ist, und eine Auswerteeinheit mit den Magnetfeldsensoren (8a, 8b) verbunden ist, wobei die Auswerteeinheit zur Ermittlung der tangentialen Verformung des Fahrzeugreifens (1) aus den Phasenwinkeln zwischen den Messsignalen für die Spuren (3a, 3b) mit verschiedenem Radius ausgebildet ist,
**dadurch gekennzeichnet,**
- **dass** ein Fahrzeugreifen (1) nach einem der Ansprüche 1 bis 9 verwendet ist und
- die Auswerteeinheit ein von der Reifeneinfederung weniger abhängiges Verformungssignal aus den Phasenwinkeln der in erster, geringerer Neigung zur Radialen angeordneten Sektorübergänge (5a) ermittelt,
- hingegen ein vom Verhältnis der Reifeneinfederung stärker abhängiges Verformungssignal aus den Phasenwinkeln der in zweiter, stärkerer Neigung zur Radialen angeordneten Sektorübergänge (5b) ermittelt.

11. System nach Anspruch 10, **dadurch gekennzeichnet, dass** die Magnetfeldsensoren (8a, 8b) an einer Position senkrecht in Bezug auf die Fahrbahn (9) und oberhalb des Mittelpunkts (6) des Fahrzeugreifens (1) angeordnet sind.

12. System nach Anspruch 10 oder 11, **dadurch gekennzeichnet, dass** die Auswerteeinheit die unabhängig von der Reifeneinfederung ermittelte tangentialen Verformung zu der abhängig von der Reifeneinfederung ermittelten tangentialen Verformung in Beziehung setzt.

13. System nach Anspruch 10 oder 11 oder 12, **dadurch gekennzeichnet, dass** ein Reifen gemäß Anspruch 5 verwendet ist und der Raddrehsinn detektiert wird.

14. Verfahren zum Messen der Verformung von Fahrzeugreifen nach Anspruch 1, mittels jeweils eines Magnetfeldsensors (8a, 8b), der auf je eine der mindestens zwei konzentrischen Spuren (3a, 3b) magnetisierter Sektoren ausgerichtet ist, wobei die tangentiale Verformung des Fahrzeugreifens (1) aus den Phasenwinkeln zwischen den Messsignalen für die Spuren (3a, 3b) mit unterschiedlichem Radius ermittelt wird,
**gekennzeichnet durch:**
- Ermitteln des von der Reifeneinfederung unabhängigen Anteils der tangentialen Verformung aus den Phasenwinkeln der Sektorübergänge (5a), die in einer ersten Neigung zur Radialen stehen und
- Ermitteln des von der Reifeneinfederung abhängigen Anteils der tangentialen Verformung aus den Phasenwinkeln der in Bezug auf den Radius zwischen Mittelpunkt (6) und Fahrzeugreifen (1) Sektorenübergänge (5b), die in einer zweiten Neigung zur Radialen stehen.

15. Verfahren nach Anspruch 14, **gekennzeichnet durch** Verknüpfung der unabhängig von der Reifeneinfederung ermittelten tangentialen Verformung mit der ermittelten tangentialen Verformung abhängig von der Reifeneinfederung.
